# EUROPEAN PATENT SPECIFICATION

(11) **EP 2 260 000 B1**
(45) Date of publication and mention of the grant of the patent: **13.04.2016**
(21) Application number: 09713310.2
(22) Date of filing: 19.01.2009
(51) Int. Cl.: C01B 39/04, C01B 39/40, C01B 39/48, B01J 29/06, B01J 29/40, C07C 6/08

(54) **HIGH ALUMINUM CONTENT ALUMINOSILICATE MOLECULAR SIEVES AND THEIR MANUFACTURE**
ALUMINIUMREICHE ALUMOSILIKATMOLEKULARSIEBE UND DEREN HERSTELLUNGSVERFAHREN
TAMIS MOLECULAIRES DE TYPE ALUMINOSILICATE A TENEUR ELEVEE EN ALUMINIUM ET LEUR FABRICATION

(30) Priority: 22.02.2008 US 30696; 11.06.2008 EP 08158023
(43) Date of publication of application: 15.12.2010
(73) Proprietor: ExxonMobil Chemical Patents Inc., Baytown, TX 77520 (US); Exxonmobil Chemical Limited, Fareham, Hampshire PO15 7AP (GB)
(72) Inventor: ROTH, Wieslaw, J., Sewell NJ 08080 (US); RUBIN, Mae, K., Bala Cynwyd, PA 19004 (US)
(74) Representative: Mareschal, Anne
(86) International application number: PCT/EP2009/000387
(87) International publication number: WO 2009/103393

(56) References cited:
- WO-A-00/37398
- US-A- 3 308 069
- US-A- 5 626 828

## Description

### INTRODUCTION OF THE INVENTION

This invention relates to process for the manufacture of high aluminum content molecular sieves and analogues thereof; to certain novel high aluminum content molecular sieves per se; and to processes which utilize these novel materials and materials made by the manufacturing process as catalysts and/or absorbents.

### BACKGROUND OF THE INVENTION

Aluminosilicates are a well known class of molecular sieve materials which have found widespread use as catalysts and absorbents. The basic structure of these crystalline materials comprises SiO₄ tetrahedra (which have four oxygen atoms at the apexes with the silicon atom being at the center) and AlO₄ tetrahedra (which have four oxygen atoms at the apexes with the aluminum atom being at the center). These tetrahedra are regularly and three dimensionally connected to each other throughout the structure through the sharing of apex oxygen atoms. This arrangement provides a three-dimensional network structure defining pores that differ in size and shape depending on the arrangement of tetrahedra and composition of the structure. In its simplest terms the material may be considered to be a silicate material in which some of the Si⁴⁺ ions in the silicate are replaced by Al³⁺ ions. For each Si⁴⁺ ion replaced by an Al³⁺, the charge must be balanced by having other positive ions such as Na⁺, K⁺, or Ca²⁺ present. It is the presence of framework aluminum in aluminosilicates which is important in providing, for example, the catalytic properties of these materials.

A wide variety of synthetic aluminosilicates can be manufactured through various us synthesis routes. It has been relatively easy to manufacture certain aluminosilicates such as ZSM-5, MCM-22, Zeolite Beta and ZSM-22 with high SiO₂/Al₂O₃ ratios, that is, aluminosilicates which have relatively low levels of aluminum present in the framework structure It is, however, difficult to achieve low SiO₂/Al₂O₃ ratios of 20 or less, that is, aluminosilicates which have relatively high levels of aluminum. Various attempts to produce such materials have resulted in materials that are non-crystalline and/or are heavily contaminated with other materials.

WO 00/37398 (Mobil) claims a small crystal ZSM-5 which has a SiO₂/Al₂O₃ ratio of less than 25. The preferred ZSM-5 has a SiO₂/Al₂O₃ molar ratio of 15-20, and specific materials are disclosed having SiO₂/Al₂O₃ molar ratios of 15:1 and 19:1. The synthesis method utilises an amorphous silica-alumina having a SiO₂/Al₂O₃ molar ratio of 10:1 to 25:1.

EP-A-0106552 (Toyo) describes a process for the manufacture of zeolites similar to ZSM-5 and ferrierite with high SiO₂/Al₂O₃ molar ratios. The process described is organic template free and requires the crystallization of a homogeneous phase compound comprising granular amorphous aluminosilicates. The resultant aluminosilicates have SiO₂/Al₂O₃ molar ratios in excess of 19.

### SUMMARY OF THE INVENTION

Unexpectedly it has now been found that by careful selection of synthesis conditions and materials it is possible to obtain highly crystalline aluminosilicates and analogues thereof using certain source materials having SiO₂/Al₂O₃ molar ratios of 15 or less, the products including molecular sieves of certain structure types and having SiO₂/Al₂O₃ molar ratio of from 2 to less than 15. It is to be understood that, although aluminosilicates are predominately based on silica and alumina, there are analogues where the framework aluminum can be partially or completely replaced by one or more other trivalent elements, such as boron, iron or gallium; and the framework silicon can be partially or completely replaced by one or more other tetravalent elements, such as germanium.

Thus in one aspect the present invention provides a process for the manufacture of a synthetic porous crystalline molecular sieve, which process comprises the steps of:
(a) forming an aqueous reaction mixture comprising a source of Al₂O₃, a source of SiO₂, a source of metal hydroxide MOH and a structure directing agent, wherein M represents an alkali metal, in which reaction mixture
   (i) the molar ratio of H₂O/MOH is within the range of 70 to 126,
   (ii) the SiO₂/Al₂O₃ molar ratio is from 2 to 15; and
   (iii) at least a portion of the Al₂O₃ and SiO₂ is provided by an amorphous material containing both Al₂O₃ and SiO₂, said amorphous material having a SiO₂/Al₂O₃ molar ratio of 15 or less;
(b) crystallizing the reaction mixture to produce the porous crystalline molecular sieve; and
(c) recovering the crystallized material.

A molecular sieve product that may be manufactured by the process of the invention may be represented by the formula:

(n)SiO₂: Al₂O₃,

wherein n at least 2 and is less than 15.

In a further aspect, the invention provides a synthetic porous crystalline molecular sieve having the MFI structure type or the TON structure type , comprising

(n)SiO₂: Al₂O_{3,}

wherein n is from 2 to 12.

By way of example the value of n may be such as 8 to 12.

In a further aspect, the invention provides a process for converting hydrocarbons which comprises contacting a hydrocarbon feedstream under hydrocarbon conversion conditions with a synthetic porous crystalline molecular sieve according to the present invention or as prepared by the manufacturing process according to the present invention to effect conversion of the hydrocarbon feedstream.

In a yet further aspect, the invention provides an absorption process which comprises contacting a feedstream containing one or more absorbents under absorption conditions with a synthetic porous crystalline molecular sieve according to the present invention or as prepared by the manufacturing process according to the present invention to effect absorption of one or more of the absorbents from the feedstream.

The present invention provides a process capable of producing a molecular sieve having a composition involving the molar relationship: (n) SiO₂: Al₂O₃, wherein n is from 2 to less than 15, particularly preferably from 2 to 12, such as from 8 to 12. The preferred form of the molecular sieve is an aluminosilicate, such as a zeolite, preferably ZSM-5, ZSM-22, MWW family zeolite or zeolite beta. Those molecular sieves of the above specified formula wherein n is 2 to 12 and having the MFI structure type or the TON structure type are believed to be novel compositions of matter.

In the process of the present invention both the composition of the reaction mixture and form of starting materials is carefully selected. The composition of the reaction mixture is controlled such that the molar ratio of H₂O/MOH, where M is an alkali metal (preferably sodium or potassium), in the reaction mixture is within the range of 70 to 126. In addition the source of Al₂O₃ and the source of SiO₂ used in the reaction mixture are required to be or to comprise a single source that combines both Al and Si elements. Such single source of both Al₂O₃ and SiO₂ is selected to be amorphous and to have a SiO₂/Al₂O₃ molar ratio of 15 or less. This ratio may be for example, 14 or less or 12 or less, such as from 2 to 14 or from 8 to 12.

In a preferred embodiment the molecular sieve is an aluminosilicate and the source of Al₂O₃ and SiO₂ providing both Al and Si is an amorphous aluminosilicate which functions as a source of both Al₂O₃ and SiO₂. These amorphous materials may sometimes be referred to as silica stabilized aluminas, silica-alumina, acidic silica-alumina, or silica-alumina hydrates. It is preferred that the alumina is present as its boehmite (alpha alumina monohydrate). It is also preferred that the amorphous source of both Al₂O₃ and SiO₂, such as amorphous aluminosilicate, is substantially free of Na₂O. Preferably the amorphous source of both Al₂O₃ and SiO₂ such as amorphous aluminosilicate, comprises less than 1.0 wt % Na₂O, such as less than 0.5 wt % Na₂O, more preferably less than 0.1 wt % of Na₂O such as less than 0.05 wt % Na₂O, and most preferably less than 0.01 wt% Na₂O: The preferred source of Al₂O₃ and SiO₂ is a commercial material SIRAL^{®} 90 as sold by Sasol/Condea.

It is a requirement of the process that the reaction mixture includes a source of Al₂O₃ and SiO₂ that is (1) amorphous and (2) contains both Al₂O₃ source and SiO₂ source and (3) has SiO₂/Al₂O3 molar ratio of 15 or less. The porous crystalline molecular sieve that is produced by the process has a SiO₂/Al₂O₃ molar ratio of less than 15. Therefore, in order to achieve a molecular sieve product having a desired SiO₂/Al₂O₃_ratio within the specified required range, it is possible in accordance with the invention to adjust the amount of Al in the molecular sieve product by optionally including a separate source of Al₂O₃ in the reaction mixture that is different from the amorphous source of both Al₂O₃ and SiO₂ combined.

In a preferred embodiment the reaction mixture contains, in addition to the amorphous source of both Al₂O₃ and SiO₂, a separate source of Al₂O₃. This separate source may be a crystalline material. Preferably the separate source of Al₂O₃ contributes 50% or less, more preferably from 15 to 50%, such as from 20 to 45%, of the total amount of Al₂O₃ in the reaction mixture. In a preferred embodiment the reaction mixture formed in step (a) of the process has SiO₂/Al₂O₃ molar ratio of from 2 to 15, such as from 5 to 12, for example from 8 to 12. Of course, if for any reason it is desired to adjust the overall molar ratio of SiO₂/Al₂O₃ in the reaction mixture upward rather than downward, it is equally possible to add a separate source of SiO₂ to the reaction mixture to supplement the amorphous material containing both SiO₂ and Al₂O₃.

The reaction mixture may for example have a composition, expressed in terms of mole ratios, as indicated in the following Table 1:

| **TABLE 1** | | | |
|---|---|---|---|
| **Ratio** | **Useful** | **Preferred** | **Most Preferred** |
| SiO₂/Al₂O₃ | ≤15 | 2-15 | 8-12 |
| H₂O/ SiO₂ | 10-90 | 15-40 | 15-25 |
| H₂O/MOH | 70-126 | 80-126 | 90-126 |

It has been found that maintaining the H₂O/MOH mole ratio in the range 70 to 126, together with the other required process features, enables the production of the desired high aluminum content molecular sieves, especially those of the invention. Conveniently the ratio is close to 126 but may be lower and still give desirable products, such as in the range 70 to 125, eg 70 to 120 or 70 to 115. The lower end of the range, too, enables production of the target products. Narrower ranges for the ratio are conveniently 80 to 120 or 90 to 115.

The synthesis process of the invention may be performed with or without added nucleating seeds. The synthesis process of the invention may also be performed with or without organic template or structure directing agent.

Crystallization may be carried out under either stirred or static conditions. Preferably the crystallization is carried out under stirred conditions. The crystallization is preferably carried out at. a temperature of from 80 to 225 °C, more preferably from 100 to 200 °C, yet more preferably from 100 to 160 °C and most preferably from 120 to 155 °C. The time for reaction is preferably in the range 10 hours to 60 days, more preferably 10 hours to 3 days and most preferably 10 hours to 30 hours. The resultant crystalline molecular sieve is separated from the mother liquor and recovered. The recovered molecular sieves are preferably treated to convert them to their acid form, for example with ammonium nitrate; this may be followed by calcination for example at a temperature of from 400 to 600°C, such as 500 to 550°C, for example at about 538°C (1000 °F).

Since the molecular sieves of the present invention and those manufactured by the process of the present invention may be synthesized with a relatively low SiO₂/Al₂O₃ molar ratio (that is with relatively high content of element Al), the invention embodies molecular sieves with high catalytic activity. Catalytic activity of molecular sieve zeolites, such as ZSM-5, is typically measured by determining their Alpha Value, which compares the catalytic cracking activity of the catalyst (rate of normal hexane conversion per volume of catalyst per unit time) with the activity of a standard silica-alumina cracking catalyst. The Alpha Test is described in US-A-3,354,078; and in the Journal of Catalysis, Vol. 4, p. 527 (1965); Vol. 6, p. 278 (1966); and Vol. 61, p. 395 (1980). The experimental conditions of the test used herein include a constant temperature of 538°C and a variable flow rate as described in detail in the Journal of Catalysis, Vol. 61, p. 395 (1980).

In their hydrogen form, the molecular sieves of or manufactured by the process of the present invention preferably have an Alpha Value in excess of 500, more preferably in excess of 800, and most preferably in excess of 1000. Preferably the molecular sieves of or manufactured by the process of the present invention have a surface area of 200 m²g⁻¹ or greater, as determined by the BET method (S. Brunauer, P.H. Emmett and E. Teller, J. Am. Chem. Soc., 1938, 60, 309) using nitrogen adsorption at liquid nitrogen temperature.

When used as a catalyst, it may be desirable to incorporate the molecular sieves of or manufactured by the process of the present invention with another material that is resistant to the temperatures and other conditions employed in organic conversion processes. Thus the molecular sieves of or manufactured by the process of the invention may be used in the form of an extrudate with binder, where the molecular sieve is dispersed within a conventional binder. They are typically bound by forming a pill, sphere, or extrudate. The extrudate is usually formed by extruding the molecular sieve, optionally in the presence of a binder, and drying and calcining the resulting extrudate. The binder materials used are resistant to the temperatures and other conditions, e.g., mechanical attrition, which occur in various hydrocarbon conversion processes.

Examples of binder materials that may be employed with the molecular sieves of or manufactured by the process of the invention include active and inactive materials and synthetic or naturally occurring zeolites as well as inorganic materials such as clays, silica and/or metal oxides such as alumina. The latter may be either naturally occurring or in the form of gelatinous precipitates or gels including mixtures of silica and metal oxides. Naturally occurring clays which may be used include the montmorillonite and kaolin family, which families include the subbentonites, and the kaolins commonly known as Dixie, McNamee, Georgia and Florida clays or others in which the main mineral constituent is halloysite, kaolinite, dickite, nacrite, or anauxite. Such clays can be used in the raw state as originally mined or after being subjected to calcination, acid treatment or chemical modification. Examples of other materials include porous matrix materials such as silica-alumina, silica-magnesia, silica-zirconia, silica-thoria, silica-beryllia, silica-titania as well as ternary compositions such as silica-alumina-thoria, silica-alumina-zirconia, silica-alumina-magnesia and silica-magnesia-zirconia.

The molecular sieves of or manufactured by the process of the present invention may be used, for example, in the form of pills, spheres or extrudates, with or without conventional binder. The molecular sieves fined particular application in hydrocarbon conversion processes and absorption processes. Examples of preferred processes include hydrocarbon conversion processes where reduced non-selective acidity is important for reaction selectivity and/or the maintenance of catalyst activity, such as alkylation, dealkylation, disproportionation, and transalkylation reactions. Particular mention may be made of ethylbenzene conversion, xylene isomerization, toluene disproportionation and selective toluene disproportionation. The conversion of hydrocarbon feeds can take place in any convenient mode, for example, in fluidized bed, moving bed, or fixed bed reactors depending on the types of process desired. Examples of hydrocarbon conversion processes include, as non-limiting examples, the following:
(A) The catalytic cracking of a naphtha feed to produce light olefins. Typical reaction conditions include a temperature from 500°C to 750°C, pressures of subatmospheric or atmospheric, generally ranging up to 1013 kPag (10 atmospheres gauge), and residence time (volume of the catalyst/feed rate) of from 10 milliseconds to 10 seconds.
(B) The catalytic cracking of high molecular weight hydrocarbons to lower molecular weight hydrocarbons. Typical reaction conditions for catalytic crackling include temperatures of from 400°C to 700°C, pressures of from 10.1 to 3039 kPa (0.1 to 30 atmospheres), and weight hourly space velocities of from 0.1 to 100 hr⁻¹.
(C) The transalkylation of aromatic hydrocarbons in the presence of polyalkylaromatic hydrocarbons. Typical reaction conditions include a temperature of from 200°C to 500°C, a pressure of from atmospheric to 20.26 MPa (200 atmospheres), a weight hourly space velocity of from 1 to 100 hr⁻¹ and an aromatic hydrocarbon/polyalkylaromatic hydrocarbon mole ratio of from 0.5/1 to 16/1.
(D) The isomerization of aromatic feedstock components, for example, xylenes Typical reaction conditions for such include a temperature of from 230°C to 510°C, a pressure of from 50.6 to 5065 kPa (0.5 to 50 atmospheres), a weight hourly space velocity of from 0.1 to about 200 hr⁻¹ and a hydrogen /hydrocarbon mole ratio of from 0 to 100.
(E) The dewaxing of hydrocarbons by selectively removing straight chain paraffins. The reaction conditions are dependent in large measure on the feed used and upon the desired pour point. Typical reaction conditions include a temperature between 200°C'and 450°C, a pressure up to 20.69 MPag (3,000 psig) and a liquid hourly space velocity from 0.1 to 20.
(F) The alkylation of aromatic hydrocarbons, e. g., benzene and alkylbenzenes, in the presence of an alkylating agent, e. g., olefins, formaldehyde, alkyl halides and alcohols having 1 to about 20 carbon atoms. Typical reaction conditions include a temperature of from 100°C to 500°C, a pressure of from about atmospheric to 20.26 MPa (200 atmospheres), a weight hourly space velocity of from 1hr⁻¹ to 100 hr⁻¹ and an aromatic hydrocarbon/alkylating agent mole ratio of frog 1/1 to 20/1.
(G) The alkylation of aromatic hydrocarbons, e. g., benzene, with long chain olefins, e. g., C₁₄ olefin. Typical reaction conditions include a temperature of from 50°C to 200°C, a pressure of from atmospheric to 20.26 MPa (200 atmospheres), a weight hourly space velocity of from 2hr⁻¹ to 2000hr⁻¹ and an aromatic hydrocarbon/olefin mole ratio of from 1/1 to 20/1. The resulting products from the reaction are long chain alkyl aromatics which when subsequently sulfonated have particular application as synthetic detergents.
(H) The alkylation of aromatic hydrocarbons with light olefins to provide short chain alkyl aromatic compounds, e. g., the alkylation of benzene with propylene to provide cumene. Typical reaction conditions include a temperature of from 10°C to 200°C, a pressure of from 101 to 3039 kPa (1 to 30 atmospheres), and an aromatic hydrocarbon weight hourly space velocity (WHSV) of from 1hr⁻¹ to 50hr⁻¹.
(I) The hydrocracking of heavy petroleum feedstocks, cyclic stocks, and other hydrocrack charge stocks. The catalyst will contain an effective amount of at least one hydrogenation component of the type employed in hydrocracking catalysts.
(J) The alkylation of a reformate containing substantial quantities of benzene and toluene with fuel gas containing short chain olefins (e. g., ethylene and propylene) to produce mono-and di-alkylates. Preferred reaction conditions include temperatures from 100°C to 250°C, a pressure of from 690 to 5516 kPag (100 to 800 psig), a WHSV-olefin from 0.4hr⁻¹ to 0.8hr⁻¹, a WHSV-reformate of from 1hr⁻¹ to 2hr⁻¹ and, optionally, a gas recycle from 1.5 to 2.5 vol/vol fuel gas feed.
(K) The alkylation of aromatic hydrocarbons, e. g., benzene, toluene, xylene, and naphthalene, with long chain olefins, e. g. C₁₄ olefin, to produce alkylated aromatic lube base stocks. Typical reaction conditions include temperatures from about 160°C to 260°C and pressures from 2413 to 3103 kPag (350 to 450 psig).
(L) The alkylation of phenols with olefins or equivalent alcohols to provide long chain alkyl phenols. Typical reaction conditions include temperatures from 100°C to 250°C, pressures from 6.9 to 2069 kPag (1 to 300 psig) and total WHSV of from 2h⁻¹ to 10hr⁻¹.
(M) The conversion of light paraffins to olefins and/or aromatics. Typical reaction conditions include temperatures from 425°C to 760°C and pressures from 69 kPag to 13.79 MPag (10 to 2000 psig). Processes for preparing aromatic compounds from light paraffins are described in US-A-5,258,563, which is hereby incorporated by reference.
(N) The conversion of light olefins to gasoline, distillate and tube range hydrocarbons. Typical reaction conditions include temperatures of from 175°C to 375°C and a pressure of from 690 kPag to 13.79 MPag (100 to 2000 psig).
(O) Two-stage hydrocracking for upgrading hydrocarbon streams having initial boiling points above about 200°C to premium distillate and gasoline boiling range products or as feed to further fuels or chemicals. In a first stage, the molecular sieves of or manufactured by the process of the invention may be used as catalysts comprising one or more catalytically active substances, e. g. a Group VIII metal, and the effluent from the first stage may be reacted in a second stage using a second zeolite catalyst, e. g., zeolite Beta, comprising one or more catalytically active substances, for example a Group VIII metal. Typical reaction conditions include temperatures from 315°C to 455°C, a pressure from 2.76 to 17.24 MPag (400 to 2500 psig), hydrogen circulation of from 178 to 1780 m3/m3 (1000 to 10,000 SCF/bbl) and a liquid hourly space velocity(LHSV) of from 0.1 to 10.
(P) A combination hydrocracking/ dewaxing process in the presence of the zeolite bound zeolite catalyst comprising a hydrogenation metal and a zeolite such as zeolite Beta. Typical reaction conditions include temperatures from 350°C to 400°C, pressures from 9.6 to 10.4 MPag (1400 to 1500 psig), LHSVs from 0.4 to 0.6 and a hydrogen circulation from 534 to 890 m3/m3 (3000 to 5000 SCF/bbl).
(Q) The reaction of alcohols with olefins to produce mixed ethers, for example the reaction of methanol with isobutene and/or isopentene to provide methyl-t-butyl ether (MTBE) and/or t-amyl methyl ether (TAME). Typical conversion conditions include temperatures from 20°C to 200°C, pressures from 202 kPa to 20.3 MPa (2 to 200 atm), WHSV (gram olefin per hour gram-molecular sieve) from 0.1hr⁻¹ to 200hr⁻¹ and an alcohol to olefin molar feed ratio from 0.1/1 to 5/1.
(R) The disproportionation of aromatics, for example the disproportionation of toluene to make benzene and paraxylene. Typical reaction conditions include a temperature of from 200°C to 760°C, a pressure of from about atmospheric to 6.08 MPa (60 atmosphere), and a WHSV of from 0.1hr⁻¹ to 30hr⁻¹.
(S) The conversion of naphtha (e. g. C₆-C₁₀) and similar mixtures to highly aromatic mixtures. Thus, normal and slightly branched chained hydrocarbons, preferably having a boiling range above about 40°C, and less than about 200°C, can be converted to products having a substantially higher octane aromatics content by contacting the hydrocarbon feed with the molecular sieves of the present invention at a temperature in the range of from 400°C to 600°C, preferably 480°C to 550°C at pressures ranging from atmospheric to 4 MPa (40 bar), and liquid hourly space velocities (LHSV) ranging from 0.1 to 15.
(T) Selectively separating hydrocarbons by adsorption of the hydrocarbons. Examples of hydrocarbon separation include xylene isomer separation and separating olefins from a feed stream containing olefins and paraffins.
(U) The conversion of oxygenates, e. g. alcohols, such as methanol, or ethers, such as dimethylether, or mixtures thereof to hydrocarbons including olefins and aromatics with typical reaction conditions including a temperature of from 275°C to 600°C, a pressure of from 50.6 kPa to 5.06 MPa (0.5 to 50 atmospheres) and a liquid hourly space velocity of from 0.1 to 100.
(V) The oligomerization of straight and branched chain olefins having from about 2 to about 5 carbon atoms. The oligomers which are the products of the process are medium so heavy olefins which are useful for both fuels, i.e. gasoline or a gasoline blending stock, and chemicals. The oligomerization process is generally carried out by contacting the olefin feedstock in a gaseous state phase with a catalyst comprising the molecular sieve of the invention, typically at a temperature in the range of from about 250°C to about 800°C, a LHSV of from 0.2 to 50 and a hydrocarbon partial pressure of from 10.1 kPa to 5.06 MPa (0.1 to 50 atmospheres). Temperatures below about 250°C may be used to oligomerize the feedstock when the feedstock is in the liquid phase when contacting the molecular sieve catalyst. Thus, when the olefin feedstock contacts the molecular sieve catalyst in the liquid phase, temperatures of from 10°C to 250°C may typically be used.
(W) The conversion of C₂ unsaturated hydrocarbons (ethylene and/or acetylene) to aliphatic C₆₋₁₂ aldehydes and converting such aldehydes to the corresponding C₆₋₁₂ alcohols, acids, or esters. In general, the catalytic conversion conditions typically include a temperature of from 100°C to 760°C, a pressure of from 10.1 to 20.26 MPa (0.1 to 200 atmospheres)and a weight hourly space velocity of from 0.08hr⁻¹ to 2,000hr⁻¹.

The molecular sieves of or manufactured by the process of the present invention may also be used in absorption processes, as mentioned hereinbefore. Example. of such processes are absorptive separation for eg light gas separations. By way of example, mention is made of the separation of any of CO₂, methane and C2 to C6 hydrocarbons from each other or from admixtures of other materials, such as the separation of components from ethylene/ethane mixtures or propylene/propane mixtures.

In order to more fully illustrate the nature of the invention and the manner of practicing same, the invention is further illustrated by the following examples. In these examples, various parameters were measured in order to define the properties of the products that were manufactured. These parameters were measured by techniques described below.

Alpha Value is an approximate indication of the catalytic cracking activity of the catalyst compared to a standard catalyst. It represents the relative rate constant (rate of normal hexane conversion per volume of catalyst per unit time). It is based on the activity of silica-alumina cracking catalyst taken as having an Alpha Value of 1 (Rate Constant=0.016 sec.sup.-1). The Alpha Test is described in U.S. Pat. No. 3,354,078; in the Journal of Catalysis, Vol. 4, p. 527 (1965); Vol. 6, p. 278 (1966); and Vol. 61, p. 395 (1980), each incorporated herein by reference as to that description. The experimental conditions of the test used herein include a constant temperature of 538 C. and a variable flow rate as described in detail in the Journal of Catalysis, Vol. 61, p. 395 (1980).

Surface area was determined by the BET method as described by S. Brunauer, P.H. Emmett and E. Teller, J. Am. Chem. Soc., 1938, 60, 309, using nitrogen adsorption at liquid nitrogen temperature.

Water sorption capacity was measured to determine the pore capacity of the catalyst samples. According to the measurement procedure the catalyst is first dried in thermogravimetric analysis (TGA) equipment under helium at 500C for 30 minutes, then cooled to 30C. Water is then pumped over the dried material at 30C and 800 Pa (6 Torr) partial pressure. Water is adsorbed until full capacity is achieved, as monitored by the weight gain on the microbalance of the TGA. The weight changes are measured by the microbalance in the TGA. The final data may be reported as water uptake in mg / gram of dried catalyst; or in percentage terms (weight of water adsorbed expressed as a percentage of the dry weight of the catalyst sample).

Cyclohexane sorption capacity was measured to determine the pore capacity of the catalyst samples. According to the measurement procedure the catalyst is first dried in thermogravimetric analysis (TGA) equipment under helium at 500C for 30 minutes then cooled to 90C. Cyclohexane is then pumped over the dried material at 90C and 13.2 MPa (99 Torr) partial pressure. Cyclohexane is adsorbed until the full capacity is achieved, as monitored by the weight gain on the microbalance of the TGA. The weight changes are measured by the microbalance in the TGA. The final data may be reported as cyclohexane uptake in mg / gram of dried catalyst; or in percentage terms (weight of cyclohexane adsorbed expressed as a percentage of the dry weight of the catalyst sample).

n-Hexane sorption capacity was measured to determine the pore capacity of the catalyst samples. According to the measurement procedure the catalyst is first dried in thermogravimetric analysis (TGA) equipment under helium at 500C for 30 minutes then cooled to 90C. n-Hexane is pumped over the material at 90C and 10 MPa (75 Torr) partial pressure. n-Hexane is adsorbed until the full capacity is achieved, as monitored by the weight gain on the microbalance of the TGA. The weight changes are measured by the microbalance in the TGA. The final data may be reported as n-hexane uptake in mg / gram of dried catalyst; or in percentage terms (weight of n-hexane adsorbed expressed as a percentage of the dry weight of the catalyst sample).

### EXAMPLE 1 Synthesis of ZSM-5 using n-propylamine and seeds

A reaction (synthesis) mixture was prepared consisting of 250 g of deionised water, 10 g of a 50% aqueous NaOH solution, 16 g of sodium aluminate (25.5% alumina and 19.5% Na₂O), 8 g of n-propylamine, 3 g of ZSM-5 seeds and 75g of SIRAL^{®} 90 an amorphous silica-alumina (15:1 molar silica/alumina) as supplied by Sasol/Condea. The H₂O/NaOH molar ratio of the reaction mixture was 125.6. The reaction mixture was charged into a Parr autoclave and crystallized for 27 hours at 155 °C (310 °F) and at a stirrer speed of 200 RPM.

Solid product was isolated from the resultant product mixture by nitration, washed with deionised water and dried at 110 °C. The product mixture contained 78.7% solids. The solid product was analysed by x-ray diffraction and Scanning Electron Microscopy (SEM) and was found to be a highly crystalline small crystal ZSM-5 (hence MFI structure type) having a SiO₂/Al₂O₃ mole ratio of 9:1.

The ZSM-5 material was converted to its acid form by exchange with ammonium nitrate and was then calcined at 538°C (1000 °F). The calcined material was found to have an Alpha Value of 1412, a BET surface area of 260 m²g⁻¹, a water sorption capacity of 10.6 %, a cyclohexane sorption capacity of 6.9 % and an n-hexane sorption capacity of 9.8 %.

### EXAMPLE 2 Synthesis of ZSM-5 using n-propylamine and seeds

A (reaction) synthesis mixture was prepared consisting of 250g of deionised water, 14.5 g of a 50% aqueous NaOH solution, 6 g of sodium aluminate (25.5% alumina and 19.5% Na₂O), 8 g of n-propylamine, 3 g of ZSM-5 seeds and 75g of SIRAL^{®}90, an amorphous silica-alumina (15:1 molar silica/alumina) as supplied by Sasol/Condea. The H₂O/NaOH molar ratio of the reaction mixture was 91.5. The reaction mixture was charged into a Parr autoclave and crystallized for 24 hours at 155 °C (310 °F) and at a stirrer speed of 200 RPM.

Solid product was isolated from the resultant product mixture by filtration, washed with deionised water and dried at 110 °C. The product mixture contained 86.9 % solids. The solid product was analyzed by x-ray diffraction and SEM and was found to be a highly crystalline small crystal ZSM-5 (hence MFI structure type) having a SiO₂/Al₂O₃ mole ratio of 11:1.

The ZSM-5 material was converted to its acid form by exchange with ammonium nitrate and was then calcined at 538°C (1000 °F). The calcined material was found to have an Alpha Value of 839.

### EXAMPLE 3 Synthesis of ZSM-5 using n-propylamine and seeds

A reaction (synthesis) mixture was prepared consisting of 125 g of deionised water, 10 g of a 50% aqueous NaOH solution, 3 g of sodium aluminate (25.5% alumina and 19.5% Na₂O), 8 g of n-propylamine, 2 g of ZSM-5 seeds and 37.5 g of SIRAL^{®}90, an amorphous silica-alumina (15:1 molar silica/alumina) as supplied by Sasol/Condea. The H₂O/NaOH molar ratio of the reaction mixture was 71.0. The reaction mixture was charged into a Parr autoclave and crystallized for 22 hours at 155 °C (310 °F) and at a stirrer speed of 200 RPM.

Solid product was isolated from the resultant product mixture by filtration, washed with deionised water and dried at 110 °C. The solid product was analyzed by x-ray diffraction and SEM and was found to be a highly crystalline small crystal ZSM-5 (hence MFI structure type) having a SiO₂/Al₂O₃ mole ratio of 12:1.

The ZSM-5 material was converted to its acid form by exchange with ammonium nitrate and was then calcined at 538°C (1000 °F). The calcined material was found to have an Alpha Value of 1416, a BET surface area of 244 m²g⁻¹, a water sorption capacity of 8 %, a cyclohexane sorption capacity of 5.2 % and an n-hexane sorption capacity of 9 %.

## Claims

1. A process for the manufacture of a synthetic porous crystalline molecular sieve, which process comprises the steps of:
(a) forming an aqueous reaction mixture comprising a source of Al₂O₃, a source of SiO₂, a source of metal hydroxide MOH and a structure directing agent, wherein M represents an alkali metal, in which reaction mixture
(i) the molar ratio of H₂O/MOH is within the range of 70 to 126,
(ii) the SiO₂/Al₂O₃ molar ratio is from 2 to 15; and
(iii) at least a portion of the Al₂O₃ and SiO₂ is provided by an amorphous material containing both Al₂O₃ and SiO₂, said amorphous material having a - SiO₂/Al₂O₃ molar ratio of 15 or less;
(b) crystallizing the reaction mixture to produce the porous crystalline molecular sieve; and
(c) recovering the crystallized material.

2. The process according to claim 1 wherein the molar ratio of H₂O/MOH in the reaction mixture is within the range of 80 to 126.

3. The process according to claim 1 wherein the molar ratio of H₂O/MOH in the reaction mixture is within the range of 90 to 126.

4. The process according to any of the preceding claims wherein crystallization is effected at a temperature of 80 to 225 °C, preferably of 100 to 160 °C.

5. The process according to any of the preceding claims wherein, in addition to the amorphous material containing both Al₂O₃ and SiO₂, the reaction mixture also comprises a separate source of Al₂O₃.

6. The process according to claim 5 wherein the separate source of Al₂O₃ contributes 50% or less of the total amount of Al₂O₃ in the reaction mixture.

7. The process according to claim 5 wherein the separate source of Al₂O₃ contributes from 20% to 45% of the total amount of Al₂O₃ in the reaction mixture.

8. The process according to any one of claims 5 to 7 wherein the separate source of Al₂O₃ is a crystalline material.

9. The process according to any of the preceding claims wherein the amorphous material containing both Al₂O₃ and SiO₂ comprises less than 1.0 wt % Na₂O, preferably less than 0.1 wt% Na₂O, more preferably less than 0.01 wt% Na₂O.

10. The process according to any of the preceding claims wherein the amorphous material containing both Al₂O₃ and SiO₂ is an amorphous material with a SiO₂/Al₂O₃ molar ratio of 14 or less, preferably of 12 or less, more preferably of from 8 to 12.

11. The process according to any of the preceding claims wherein the reaction mixture formed in step (a) has a SiO₂/Al₂O₃ molar ratio of from 5 to 12.

12. A synthetic porous crystalline molecular sieve having the MFI structure type or the TON structure type, comprising:
(n)SiO₂: Al₂O₃,
wherein n is from 2 to 12.

13. The synthetic porous crystalline molecular sieve of claim 12 wherein n is from 8 to 12.

14. The molecular sieve according to any of claims 12 or 13 having a BET of 200 m²g⁻¹ or greater.

15. A conversion process for converting hydrocarbons which comprises contacting a hydrocarbon feedstream under hydrocarbon conversion conditions with a synthetic porous crystalline molecular sieve according to any of claims 12 to 14 or manufactured according to the process of any of claims 1 to 11 to effect conversion of the hydrocarbon feedstream.

## Patentansprüche

1. Verfahren zur Herstellung eines synthetischen, porösen, kristallinen Molekularsiebes, bei dem das Verfahren die Schritte:
(a) Bilden einer wässrigen Reaktionsmischung, die eine Quelle für Al₂O₃, eine Quelle für SiO₂, eine Quelle für Metallhydroxid MOH und ein strukturdirigierendes Mittel umfasst, wobei M ein Alkalimetall darstellt, wobei in der Reaktionsmischung
(i) das Molverhältnis H₂O/MOH im Bereich von 70 bis 126 liegt,
(ii) das SiO₂/Al₂O₃-Molverhältnis 2 bis 15 beträgt,
(iii) mindestens ein Teil des Al₂O₃ und SiO₂ durch amorphes Material bereitgestellt wird, wobei das amorphe Material ein SiO₂/Al₂O₃-Molverhältnis von 15 oder kleiner aufweist,
(b) Kristallisieren der Reaktionsmischung, um das poröse kristalline Molekularsieb herzustellen, und
(c) Gewinnen des kristallisierten Materials umfasst.

2. Verfahren nach Anspruch 1, bei dem das Molverhältnis von H₂O/MOH in der Reaktionsmischung im Bereich von 80 bis 126 liegt.

3. Verfahren nach Anspruch 1, bei dem das Molverhältnis von H₂O/MOH in der Reaktionsmischung im Bereich von 90 bis 126 liegt.

4. Verfahren nach einem der vorherigen Ansprüche, bei dem die Kristallisation bei einer Temperatur von 80 bis 225°C bewirkt wird, vorzugsweise von 100 bis 160°C.

5. Verfahren nach einem der vorherigen Ansprüche, bei dem die Reaktionsmischung zusätzlich zu dem amorphen Material, das sowohl Al₂O₃ als auch SiO₂ enthält, auch eine separate Quelle für Al₂O₃ umfasst.

6. Verfahren nach Anspruch 5, bei dem die separate Quelle für Al₂O₃ 50% oder weniger der Gesamtmenge an Al₂O₃ in der Reaktionsmischung beiträgt.

7. Verfahren nach Anspruch 5, bei dem die separate Quelle für Al₂O₃ 20% bis 45% der Gesamtmenge an Al₂O₃ in der Reaktionsmischung beiträgt.

8. Verfahren nach einem der Ansprüche 5 bis 7, bei dem die separate Quelle für Al₂O₃ ein kristallines Material ist.

9. Verfahren nach einem der vorherigen Ansprüche, bei dem das amorphe Material, das sowohl Al₂O₃ als auch SiO₂ enthält, weniger als 1.0 Gew.-% Na₂O umfasst, vorzugsweise weniger als 0.1 Gew.-% Na₂O, bevorzugter weniger als 0.01 Gew.-% Na₂O.

10. Verfahren nach einem der vorherigen Ansprüche, bei dem das amorphe Material, das sowohl Al₂O₃ als auch SiO₂ enthält, ein amorphes Material mit einem SiO₂/Al₂O₃-Mol-verhältnis von 14 oder weniger, vorzugsweise 12 oder weniger, bevorzugter 8 bis 12 ist.

11. Verfahren nach einem der vorherigen Ansprüche, bei dem die in Schritt (a) gebildete Reaktionsmischung ein SiO₂/Al₂O₃-Molverhältnis von 5 bis 12 aufweist.

12. Synthetisches, poröses, kristallines Molekularsieb, das den MFI Struktur Typ oder den TON Struktur Typ aufweist und das
(n)SiO₂:Al₂O₃
umfasst,
worin n 2 bis 12 ist.

13. Synthetisches, poröses, kristallines Molekularsieb nach Anspruch 12, bei dem n 8 bis 12 ist.

14. Molekularsieb nach einem der Ansprüche 12 oder 13 mit einer BET von 200 m²g⁻¹ oder größer.

15. Umwandlungsverfahren zur Umwandlung von Kohlenwasserstoffen, bei dem ein Kohlenwasserstoffeinsatzmaterial-strom unter Kohlenwasserstoffumwandlungsbedingungen mit einem synthetischen, porösen, kristallinen Molekularsieb gemäß einem der Ansprüche 12 bis 14 oder hergestellt gemäß einem der Ansprüche 1 bis 11 in Kontakt gebracht wird, um die Umwandlung des Kohlenwasserstoffeinsatz-materialstroms zu bewirken.

## Revendications

1. Procédé de fabrication d'un tamis moléculaire cristallin poreux synthétique, lequel procédé comprend les étapes consistant à :
(a) former un mélange réactionnel aqueux comprenant une source d'Al₂O₃, une source de SiO₂, une source d'hydroxyde métallique MOH et un agent directeur de structure, M représentant un métal alcalin, mélange réactionnel dans lequel
(i) le rapport molaire H₂O/MOH se situe dans la gamme de 70 à 126,
(ii) le rapport molaire SiO₂/Al₂O₃ est de 2 à 15 ; et
(iii) au moins une partie de l'Al₂O₃ et du SiO₂ est fournie par un matériau amorphe contenant à la fois de l'Al₂O₃ et du SiO₂, ledit matériau amorphe ayant un rapport molaire SiO₂/Al₂O₃ de 15 ou moins ;
(b) cristalliser le mélange réactionnel pour produire le tamis moléculaire cristallin poreux ; et
(c) récupérer le matériau cristallisé.

2. Procédé selon la revendication 1 dans lequel le rapport molaire H₂O/MOH dans le mélange réactionnel se situe dans la gamme de 80 à 126.

3. Procédé selon la revendication 1 dans lequel le rapport molaire H₂O/MOH dans le mélange réactionnel se situe dans la gamme de 90 à 126.

4. Procédé selon l'une quelconque des revendications précédentes dans lequel la cristallisation est effectuée à une température de 80 à 225 °C, de préférence de 100 à 160 °C.

5. Procédé selon l'une quelconque des revendications précédentes dans lequel, en plus du matériau amorphe contenant à la fois de l'Al₂O₃ et du SiO₂, le mélange réactionnel comprend aussi une source distincte d'Al₂O₃.

6. Procédé selon la revendication 5 dans lequel la source distincte d'Al₂O₃ contribue à 50 % ou moins de la quantité totale d'Al₂O₃ dans le mélange réactionnel.

7. Procédé selon la revendication 5 dans lequel la source distincte d'Al₂O₃ contribue à 20 % à 45 % de la quantité totale d'Al₂O₃ dans le mélange réactionnel.

8. Procédé selon l'une quelconque des revendications 5 à 7 dans lequel la source distincte d'Al₂O₃ est un matériau cristallin.

9. Procédé selon l'une quelconque des revendications précédentes dans lequel le matériau amorphe contenant à la fois de l'Al₂O₃ et du SiO₂ comprend moins de 1,0 % en poids de Na₂O, de préférence moins de 0,1 % en poids de Na₂O, mieux encore moins de 0,01 % en poids de Na₂O.

10. Procédé selon l'une quelconque des revendications précédentes dans lequel le matériau amorphe contenant à la fois de l'Al₂O₃ et du SiO₂ est un matériau amorphe avec un rapport molaire SiO₂/Al₂O₃ de 14 ou moins, de préférence de 12 ou moins, mieux encore de 8 à 12.

11. Procédé selon l'une quelconque des revendications précédentes dans lequel le mélange réactionnel formé à l'étape (a) a un rapport molaire SiO₂/Al₂O₃ de 5 à 12.

12. Tamis moléculaire cristallin poreux synthétique ayant le type de structure MFI ou le type de structure TON, comprenant :
(n)SiO₂:Al₂O₃
dans lequel n vaut de 2 à 12.

13. Tamis moléculaire cristallin poreux synthétique de la revendication 12 dans lequel n vaut de 8 à 12.

14. Tamis moléculaire selon l'une quelconque des revendications 12 et 13 ayant une BET de 200 m².g⁻¹ ou plus.

15. Procédé de conversion destiné à convertir des hydrocarbures qui comprend la mise en contact d'un courant de charge d'hydrocarbures dans des conditions de conversion d'hydrocarbures avec un tamis moléculaire cristallin poreux synthétique selon l'une quelconque des revendications 12 à 14 ou fabriqué selon le procédé de l'une quelconque des revendications 1 à 11 pour effectuer la conversion du courant de charge d'hydrocarbures.
